# EUROPEAN PATENT APPLICATION

(11) **EP 3 396 944 A1**
(43) Date of publication of application: **31.10.2018**
(21) Application number: 16878410.6
(22) Date of filing: 09.12.2016
(51) Int. Cl.: H04N 5/64, G02B 27/02, G09F 9/00

(54) **INFORMATION DISPLAY DEVICE AND INFORMATION DISPLAY METHOD**

(30) Priority: 24.12.2015 JP 2015252205
(71) Applicant: Kabushiki Kaisha Toshiba, Minato-ku Tokyo 105-8001 (JP); Toshiba Energy Systems & Solutions Corporation, Saiwai-ku Kawasaki-Shi Kanagawa 2120013 (JP)
(72) Inventor: SHIGEYAMA, Musashi, Tokyo (JP); OSAKI, Kenji, Tokyo (JP); KATO, Takaki, Tokyo (JP)
(74) Representative: AWA Sweden AB
(86) International application number: PCT/JP2016/086701
(87) International publication number: WO 2017/110518

(57) **Abstract**

To provide an information display device that can be worn inside protective equipment covering the face and an information display method that achieves the same.

The information display device includes: an image generation unit that generates an image signal to display an image to be viewed by a user; an optical unit that generates an image light according to the image signal and projects the image light onto a reflection plate to lead the image light to a pupils of the user; a first frame that can be displaced with respect to an inner surface of a full-face mask; a frame unit equipped with the first frame displaceable inside the full-face mask and a second frame positioned inside the full-face mask by a pressing force that is generated by displacement of the first frame when a user wears the full-face mask; wherein the image generation unit and the optical unit are equipped to the frame unit; and the second frame includes a lower frame configured to be attachable to the back of the user's nose via a nose cup of the full-face mask; and an intermediate frame connecting the upper frame and the lower frame.

## Description

### [Field]

Embodiments of the present invention relate to an information display device and an information display method.

### [Background]

In the construction site and maintenance site of a large facility such as a plant, generational change has advanced due to retirement of skilled workers with a lot of know-how and young workers who are comparatively inexperienced are deployed on site. Since a large number of relatively inexperienced workers are deployed on site in place of the experienced workers along with the progress of generational change, there is concern about deterioration in work quality and increase in human error. Thus, succession and training of skills to young workers is an urgent task.

For instance, in order to safely and infallibly complete the scheduled work, in morning meetings and pre-work meetings on site, reading of instruction documents and checking of work contents are performed. However, in a large-scale facility such as a plant, a large number of workers at different places advance the work shared at the same time and thus it is not always possible for experts to check all the work. Hence, work quality is influenced by the skills of workers of respective sites.

In order to improve the on-site work described above, for instance, it is being studied to advance work under the state where experts in the office also shares the situation of workers on site by using information devices such as tablet terminals. However, when a tablet terminal is adopted as an information device, there is a problem in operability due to circumstances such as one hand being blocked to hold the tablet terminal. In consideration of the problem of operability, it is preferable that the information device used for sharing information on the site situation with experts is capable of browsing information in a hands-free manner. As a promising choice for such an information device, introduction of a wearable terminal such as a head mount display of light-transmission type is being considered.

In recent years, by improving the optical system and devising the design, wearable terminals have been reduced in size and weight to such an extent that users do not feel uncomfortable even when the wearable terminals are worn during work.

Many wearable terminals have a structure in which a user is allowed to view an image by mounting a unit composed of optical components such as a lens, a screen, and a projector configured to project image light on an glasses-type support frame. By adopting the glasses-type support frame, it is generally considered that the sense of resistance to wearing can be reduced as a merit.

In addition, as a configuration for improving the convenience at the time of use, an attachment for adding a function is prepared in the wearable terminal in some cases.

Further, there has been proposed a wearable terminal that can be attached to the outside of protective equipment such as a so-called full-face mask.

### [Citation List]

### [Patent Literature]

[PTL 1] Japanese Unexamined Patent Application Publication No. 2012-159681
[PTL 2] Japanese Patent No. 5589992
[PTL 3] Japanese Unexamined Patent Application Publication No. 2015-166708

### [Summary]

### [Technical Problem]

However, in the case of work in which users are required to wear protective equipment such as a so-called full-face mask covering the face like a gas mask and/or a dust mask, the conventional wearable terminal cannot be worn. This is because a leak occurs in the glasses-type attachment.

Although a wearable terminal attachable to the full-face mask has also been proposed, such a wearable terminal is attached and fixed to the outside of the full-face mask. In this case, a user wearing the full-face mask watches the display section through the eyepiece of the full-face mask, and the visibility deteriorates as compared with the general use state in which the full-face mask is not worn. Further, when a wearable terminal is used in a region where radioactive substances are present in the space, it may cause radioactive contamination by the radioactive substances. For instance, radioactive substances floating in the space may adhere to the wearable terminal.

Thus, in the case of using protective equipment covering the face such as the full-face mask, there has been a demand for an information display device that can be used inside a full-face mask (i.e., inside the space formed between the full-face mask and the face).

In view of the above-described problems, an object of embodiments of the present invention is to provide an information display device that can be worn inside protective equipment covering the face and an information display method that achieves the same.

### [Brief Description of Drawings]

Fig. 1 is a perspective view of an information display device according to one embodiment.
Fig. 2 is an arrow view as viewed from the direction of the arrow A in Fig. 1.
Fig. 3 is a schematic diagram illustrating an application of the information display device according to the embodiment.
Fig. 4 is a schematic diagram illustrating configuration of the information display device according to the embodiment.
Fig. 5 is a flowchart illustrating a flow of processing of an information display procedure to be performed by the information display device according to the embodiment.

### [Description of Embodiment]

Hereinafter, an information display device and an information display method according to embodiments of the present invention will be described with reference to the accompanying drawings. In the following description, directional terms such as front, back, up, down, left, and right are on the basis of the illustrated state or the normal use state (mounting state). Although a description will be given of a case where a full-face mask 1 is exemplified as protective equipment for covering the face in the following, protective equipment for covering the face is not necessarily limited to those equipped with a nose cup 2 for covering the nose.

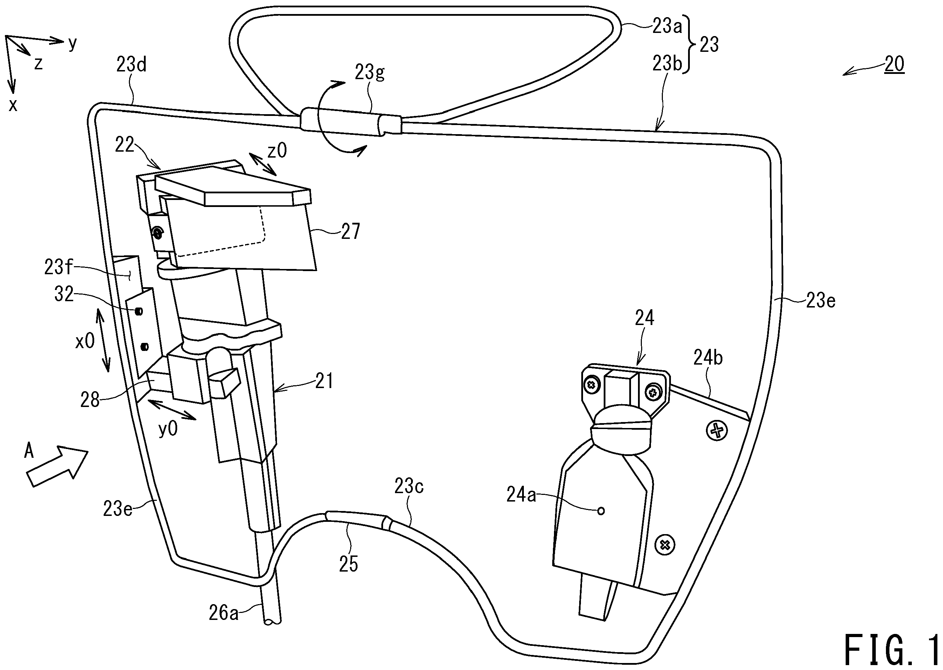

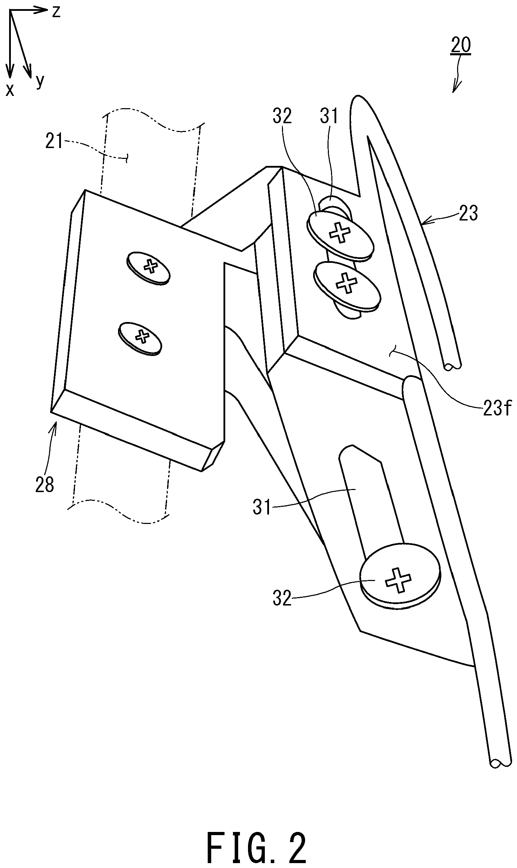

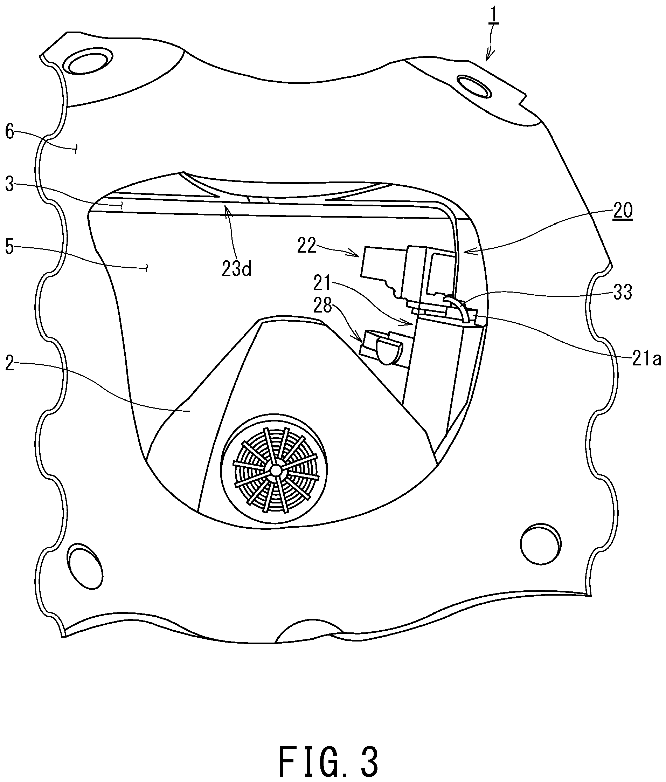

Fig. 1 is a perspective view illustrating an information display device 20 according to one embodiment of the present invention. Fig. 2 is an arrow view as viewed from the direction of the arrow A in Fig. 1, and also is a schematic diagram illustrating an attachment means by which an optical unit 22 is attached to an image generation unit 21 so as to be positionally adjustable. Fig. 3 is a schematic diagram illustrating an application of the information display device 20.

The x-axis, the y-axis, and the z-axis shown in Fig. 1 and Fig. 2 are the axis of the up-and-down direction along an intermediate frame 23e, the axis of the right-and-left direction along a lower frame 23c, and the axis of the anteroposterior direction of the user wearing the information display device 20, respectively. The x-axis, the y-axis, and the z-axis may be straight or curved. The number of axes may be at least one, but it is preferable that the number of axes is three including the up-and-down direction, the right-and-left direction, and the anteroposterior direction as viewed from the user wearing the information display device 20.

The information display device 20 is configured as a device that a user can wear inside the full-face mask 1 (i.e., inside the space formed between the full-face mask 1 and the face), by being pressed by the nose cup 2 covering the nose and the forehead portion of the user wearing the full-face mask 1. The full-face mask 1 is as an example of protective equipment for covering the face.

The information display device 20 includes at least the image generation unit 21, the optical unit 22, and a frame unit 23 configured to support the image generation unit 21 and the optical unit 22, as internal units to be mounted inside the full-face mask 1.

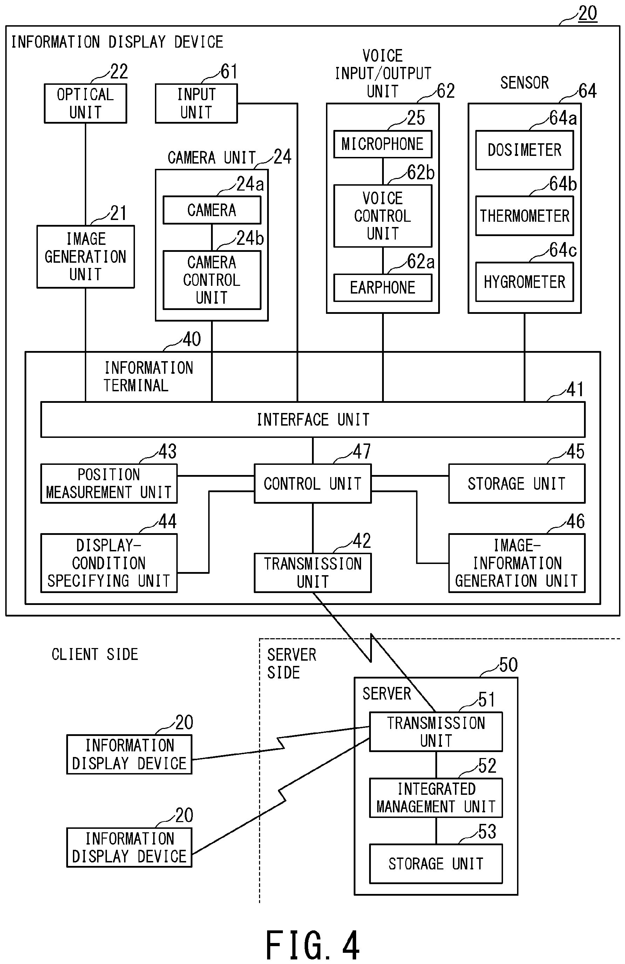

The information display device 20 illustrated in Fig. 1 further includes a camera unit 24 as an imaging means and a microphone 25 as a voice input means, in addition to the image generation unit 21, the optical unit 22, and the frame unit 23. The camera unit 24 is equipped with a camera 24a for imaging and a camera controller 24b (Fig. 4) for controlling this camera 24a.

The image generation unit 21 has a function of generating an image signal for displaying an image to be visually recognized by a user and generates the image signal of the image on the basis of the information of the given image. In addition, the image generation unit 21 has a function of performing bi-directional information transmission by wire or wirelessly with another unit (regardless of whether another unit is within the own device or another unit is an external device). The image generation unit 21 can acquire image information for generating an image signal from a unit other than the image generation unit 21, such as an information terminal 40 (Fig. 4) connected via a connecting means such as a cable 26.

The optical unit 22 includes, e.g., a light source, an optical element, and a reflection plate (projection plate) 27, and has a function of generating image light according to an image signal received from the image generation unit 21 and a function of projecting the generated image light. In the optical unit 22, the generated image light is projected from the light source onto the reflection plate (projection plate) 27. Incidentally, the optical unit 22 illustrated in Fig. 1 is an example in which a light source and an optical element are built in. The light source and the optical element that cannot be visually recognized from the outside are not shown in Fig. 1.

The reflection plate 27 is a component that reflects at least a part of the image light to be projected and leads it to the pupils of a user. That is, the reflection plate 27 functions as a screen for displaying the image light to be projected, and the image given to the image generation unit 21 is displayed. The reflection plate 27 is fixed to the optical unit 22 so as to maintain the adjusted arrangement (i.e., positional relationship) whereby the image light is led to the pupils of the user.

The frame unit 23 is a supporting body that supports the image generation unit 21 and the optical unit 22. The frame unit 23 is configured to be able to be disposed between an eyepiece (i.e., window portion) 5 on the front face of the full-face mask 1 and a skirt (i.e., lip portion) 6 that is a portion to be brought into contact with the face of a wearer. That is, the frame unit 23 is composed of a first frame 23a and a second frame 24b. The first frame 23a can be displaced with respect to the inner surface of the full-face mask 1, such as the front-side (face-side surface) of the eyepiece 5 or an eye frame 3 (i.e., a frame body of an eyepiece (window portion) 5) inside the full-face mask 1. The second frame 23b is engaged with the first frame 23a, and is positioned inside the full-face mask 1 by a pressing force generated by displacement of the first frame 23a when the user wears the full-face mask 1.

In the present embodiment, the second frame 23b includes, in particular, a lower frame 23c configured to be attachable to the back of the user's nose via the nose cup 2 of the full-face mask 1, an upper frame 23d engaged with the first frame 23a, and an intermediate frame 23e connecting the upper frame 23d and the lower frame 23c. Here, the back of nose is a part of the nose extending from the root of the nose to the tip of the nose.

In addition, the illustrated first frame 23a is configured to be displaceable between the eyepiece 5 and the skirt 6 of the full-face mask 1. It is sufficient that amount of this possible displacement is such an amount that the minimum pressing force for positioning of the second frame 23b can be generated when the user wears the full-face mask 1. The amount of this possible displacement may be such a displacement that the first frame 23a is slightly deformable.

Further, the image generation unit 21 and the optical unit 22 are attached to the frame unit 23 in such a manner that the optical unit 22 can be positionally adjusted with respect to the user wearing the full-face mask 1 in at least one of the up-and-down direction (x-axis direction in Fig. 1), the right-to-left direction (y-axis direction in Fig. 1), and the anteroposterior direction (z-axis direction in Fig. 1) .

The up-and-down direction, the right-to-left direction, and the anteroposterior direction are not limited to the x-axis, the y-axis, and the z-axis of the exact three-dimensional orthogonal coordinate system shown in Fig. 1 but may be inclined with respect to a right angle or may draw an arc. In other words, in the present embodiment, it is sufficient that the position of the reflection plate 27 of the optical unit 22 can be adjusted in either direction with respect to an eye position of a user.

The information display device 20 exemplified in Fig 1 includes three attachment means that can be positionally adjusted in three different axial directions, as means for being attached to the position-adjustable frame unit 23 of the optical unit 22.

The three attachment means are an optical-unit attachment portion 21a for detachably and positionally adjustably attaching the optical unit 22 (adjustable in the z-axis direction with an adjustment width z0 (≠0)), an attachment unit 28 for detachably and positionally adjustably attaching the image generation unit 21 (adjustable in the y-axis direction with an adjustment width y0 (≠0)), and an attachment unit 23f for detachably and positionally adjustably attaching the attachment unit 28 (adjustable in the x-axis direction with an adjustment width x0 (≠0)).

As a configuration example of providing the attachment unit 23f with an adjustment width, the information display device 20 illustrated in Fig. 1 is positionally adjustable within the range of width of an long-width elongated hole 31 by using this elongated hole 31 and a fixed hole provided in the attachment unit 28 so as to be detachably fixed by a fixing tool 32 such as a screw, which elongated hole 31 is provided in the attachment unit 23f (adjustable in the x-axis direction with an adjustment width x0 in Fig. 1). However, configuration of providing the attachment unit 23f with an adjustment width is not limited to the above example. Other known configurations such as a slide rail with a lock mechanism can be applied. Further, the above-described configuration example of providing the attachment unit 23f with an adjustment width is not limited to the attachment unit 23f but can also be applied to the optical-unit attachment portion 21a and the attachment unit 28 that are other attachment means.

The image generation unit 21 and the optical unit 22 are electrically connected to each other. Thus, in order to make it possible to adjust the position of the optical unit 22 with respect to the image generation unit 21, an electrical path 33 (Fig. 3) for electrically connecting the image generation unit 21 and the optical unit 22 to each other is required to be capable of absorbing the variation of the electric path length between the image generation unit 21 and the optical unit 22, because this electric path length varies along with the position adjustment of the optical unit 22.

For this reason, in the case of the information display device 20, the electrical path 33 for electrically connecting the image generation unit 21 to the optical unit 22 is configured by using at least one of a flexible printed circuit board and a wire harness, both of which deform so as to absorb the variation in electrical path length. The length of the electrical path 33 is set in consideration of the range of position adjustment between the image generation unit 21 and the optical unit 22. By configuring the electrical path 33 to be bendable when the electrical path 33 becomes short, it is possible to maintain the electrical connection without modification of the image generation unit 21 and the optical unit 22.

The first frame 23a of the frame unit 23 extends in the right-and-left direction by such a length that the first frame 23a is accommodated inside the full-face mask 1 when the user wearing the full-face mask 1 wears the information display device 20. In addition, the forehead abutment portion (the portion in contact with the forehead of a user) that receives the pressing force applied from the user's forehead in the first frame 23a is subjected to the R-bending processing so as to follow the curved surface of the face.

The upper frame 23d of the second frame 23b engaged with the first frame 23a is subjected to the R-bending processing along the curved surface of the eyepiece 5 and the eye frame 3 on the inner surface of the full-face mask 1, and has depths in the anteroposterior direction so as to be brought into contact with the inner surface of the full-face mask 1 by the pressing force from the first frame 23a. As described above, the first frame 23a is disposed between the skirt portion 6 of the full-face mask 1 and the upper frame 23d of the second frame 23b. When a user wears the full-face mask 1, the first frame 23a is displaced by the pressing force of the user's forehead and can apply a pressing force to the inner surface of the full-face mask 1 via the upper frame 23d of the second frame 23b on the side of the full-face mask 1.

Although the longitudinal direction of the upper frame 23d is the right-and-left direction, the first frame 23a is rotatably mounted around the upper frame 23d as its rotation axis via a fixing portion 23g within a range of a predetermined angle (less than 90° to the front and less than 90° to the rear when the horizontal direction is 0°). By adjusting this angle, the first frame 23a can adjust the depth in the anteroposterior direction, i.e., the distance between (a) the contact portion between the forehead of the user and the first frame 23a and (b) the inner surface of the full-face mask 1 (eyepiece 5) with which the upper frame 23d of the second frame 23b is brought into contact.

The lower frame 23c is provided under the upper frame 23d so as to be substantially in parallel with the upper frame 23d. The lower frame 23c extends in the right-and-left direction by such a length that the lower frame 23 is accommodated inside the full-face mask 1 under the state where the full-face mask 1 is worn, similarly to the upper frame 23d. The lower frame 23c is subjected to the R-bending processing so as to follow the curved surfaces of the eyepiece 5 and the eye frame 3 on the inner surface of the full-face mask 1, similarly to the upper frame 23d.

Further, in order to enable the lower frame 23c to be worn on the back of the nose, the lower frame 23c is provided with a protruded portion (i.e., curved portion) that protrudes so as to avoid the nose at the position of the center portion in the right-and-left direction where the nose is located. In the case of protective equipment equipped with the nose cup 2, the end side in the right-and-left direction of the lower frame 23c is supported by the nose cup 2. In the case of protective equipment unequipped with the nose cup 2, the end side in the right-and-left direction of the lower frame 23c is supported by the eye frame 3, the eyepiece 5 of the full-face mask 1, or the cheek bone of a user.

The curvature of the protruded portion (i.e., curved portion) is adjusted to the shape of the large nose cup 2 so as to be compatible with various types of the full-face mask 1. With such a configuration, the lower frame 23c can be mounted on the back of the user's nose via the nose cup 2 in the case of protective equipment equipped with the nose cup 2, and can be mounted on the back of the user's nose directly or via the eye frame 3 and/or the eyepiece 5 of the full-face mask 1 in the case of protective equipment unequipped with the nose cup 2.

The intermediate frame 23e respectively connects the right and left ends of the first frame 23a to the right and left ends of the lower frame 23c, and applies the pressing force applied from the first frame 23a via the upper frame 23d to the lower frame 23c. Additionally or alternatively, the frame unit 23 may be configured such that positioning of the entire frame unit 23 is performed by pressing the intermediate frame 23e against the eye frame 3 and the eyepiece 5 of the full-face mask 1 by means of the pressing force applied from the first frame 23a via the upper frame 23d.

In the frame unit 23, a part or the whole of the first frame 23a and the second frame 23b (i.e., the lower frame 23c, the upper frame 23d, and the intermediate frame 23e) may be integrally configured.

The camera unit 24 is detachably attached to the frame unit 23 as one of the internal units. The camera unit 24 images a field of view so as to generate an image signal and transmits the image signal to another unit such as an information terminal 40 (Fig. 4) connected via connection means such as a cable (not shown in Fig. 1). Images to be generated by the camera unit 24 include not only a still image but also a moving image.

The camera 24a mounted on the camera unit 24 is preferably a compact camera using an image sensor such as a CCD (Charge Coupled Device) or a CMOS (Complementary Metal Oxide Semiconductor) type sensor but is not necessarily limited thereto. In addition, it is preferable that the camera unit 24 is configured such that the imaging direction of the camera 24a substantially matches the sight direction of a user, but it is not necessarily limited thereto.

The microphone 25 has a function of converting an input sound (air vibration) into a voice signal (electric signal), and is provided in the vicinity of the mouth, e.g., in the vicinity of the center in the longitudinal direction (right-and-left direction) of the lower frame 23c so that the user can easily catch the voice. The voice signal obtained by the microphone 25 is transmitted from the microphone 25 to another unit such as the information terminal 40 (Fig. 4) connected wirelessly, for instance.

In the information display device 20 configured as described above, the first frame 23a is displaceably arranged inside the full-face mask 1 as shown in Fig. 3. The information display device 20 can perform positioning inside the full-face mask 1 by pressing the second frame 23b and the eye frame 3 from the inside by pressing force that is generated by displacement (including deformation) of the first frame 23a when the user wears the full-face mask 1.

That is, the upper frame 23d connected to the first frame 23a, the intermediate frame 23e, and/or the lower frame 23c are pressed by the eyepiece 5 from the inside by the pressing force generated by the displacement of the first frame 23a. Thereby, the frame unit 23 can be positioned inside the full-face mask 1. Additionally, the first frame 23a contacts the forehead via the skirt 6 that is in airtight contact with the face. That is, the forehead rest portion can bring the skirt 6 into contact with the user's forehead as a cushioning member.

In the above-described information display device 20, a description has been given of the case where the camera unit 24 is equipped with the camera control unit 24b as an example of the imaging unit. However, the camera control unit 24b may be provided in a unit different from the camera 24a as an external unit such as the information terminal 40 (Fig. 4).

In the above-described information display device 20, a description has been given of the case where the microphone 25 is attached to the frame unit 23 as an example of the voice input means. However, in consideration of, e.g., spatial margin formed inside the full-face mask 1, a voice control unit 62b (FIG. 4) for performing voice control processing including volume-adjustment and recording of sound inputted to the microphone 25 (Fig. 4) may be attached to the frame unit 23 as an internal unit.

Further, a voice input/output unit 62 (Fig. 4) in which the microphone 25, an earphone 62a (Fig. 4), and the voice control unit 62b are integrated like a so-called headset may be applied as an internal unit.

The information display device 20 described above can be mounted inside the full-face mask 1 covering the face without using a conventional glasses-type attachment. Thus, the information display device 20 can improve visibility of display information without obstructing the view of the user by the full-face mask 1, as compared with the case of being worn outside the full-face mask 1. It is also possible to display information necessary for a wearer of the full-face mask 1 without causing leakage that may occur in the case of using a conventional glasses-type attachment.

Since the image generation unit 21, the optical unit 22, and the frame unit 23 are housed inside the full-face mask 1 and are not exposed to the external world, they are not influenced by the environment of the external world and thus maintenance such as cleaning and reuse is easy. Hence, it is more advantageous in the case of being used in an environment where radiation is actually emitted or likely to be emitted, such as medical facilities and nuclear power facilities including an intermediate storage facility, a reprocessing plant, a MOX fuel factory, a fast breeder reactor, a fuel factory for a fast breeder reactor, a reprocessing plant for a fast breeder reactor, and a high-level-radioactive-waste final disposal facility.

Furthermore, the position of the optical unit 22 with respect to the frame unit 23 can be adjusted in plural directions different from each other. Thus, even when a user wearing the full-face mask 1 is different for each time of use, it is possible to use the full-face mask 1 under the condition where the positional relationship between the user's eye and the optical unit 22 is adjusted to a suitable position.

Although the longitudinal direction of the upper frame 23d is the right-and-left direction in the frame unit 23, the first frame 23a can rotate around the upper frame 23d as the fulcrum (i.e., rotation axis) within the range of a predetermined angle in the anteroposterior direction of a user (less than 90° to the front and less than 90° to the rear when the horizontal direction is 0°). Thus, even when there is slight variation in distance between (a) the contact portion between the forehead of the user and the first frame 23a and (b) the inner surface of the full-face mask 1 (eye piece 5) with which the upper frame 23d is brought into contact, it can be adjusted.

Note that the information display device 20 may further include components for expanding functions in addition to the image generation unit 21, the optical unit 22, and the frame unit 23 illustrated in Fig. 1. In this case, some of the components for expanding the functions constitute the internal units like the camera unit 24 and the voice input/output unit 62 (Fig. 4) described below, but most of them constitute external units arranged outside the full-face mask 1.

Next, a description will be given of the external unit of the information display device 20 to be arranged outside the full-face mask 1.

Fig. 4 is a schematic diagram (functional block diagram) illustrating configuration of the information display device 20 in terms of function. As an example in Fig. 4, a description will be given of a case where base stations such as plural access points are maintained as communication environments using the information display device 20 and information can be bidirectionally transmitted to/from an external device such as a server 50.

The information display device 20 includes, e.g. the image generation unit 21 as an image signal generation means, the optical unit 22 as an image-light generation means and a display means, and the information terminal 40 as an information input/output means for receiving and outputting information from/to an external device.

The information terminal 40 is composed of a computer capable of processing information in a manner similar to a so-called smartphone or a tablet PC.

The information terminal 40 includes an interface unit 41, a transmission unit 42, a position measurement unit 43, a display-condition specifying unit 44, a storage unit 45, an image-information generation unit 46, and a control unit 47 that controls the entirety of the information terminal 40 including the respective units 41 to 46. The interface unit 41 has, e.g., an input/output function of receiving and outputting information from/to a unit to be connected. The transmission unit 42 bidirectionally transmits information from/to an external device such as the server 50. The position measurement unit 43 measures the three-dimensional positional information of the position measurement unit 43 with reference to the reference point having been set. The display-condition specifying unit 44 transmits an image generation command to the image generation unit 21 connected via the interface unit 41 when a condition (display condition) for generating image light is satisfied. The image-information generation unit 46 generates image information to be transmitted to the image generation unit 21.

The interface unit 41 has an interface function for receiving and outputting information from/to a unit to be connected.

As interface functions for inputting and outputting information, the information terminal 40 illustrated in Fig. 4 includes the image generation unit 21, the camera unit 24, an input unit 61 as a wearable input means (man machine interface), an output unit 62, and a sensor 64 as physical quantity detection means for detecting physical quantity including a dosimeter 64a, a thermometer 64b, and a hygrometer 64c.

The voice input/output unit 62 is a component corresponding to a so-called head set and is an integrally configured unit that performs voice input and voice output. The voice input/output unit 62 includes the microphone 25 as a voice input means, the earphone 62a as a voice output means, and the voice control unit 62b as a voice control means. The voice control unit 62b performs necessary control processing such as adjustment of input sensitivity and sound volume, in addition to input, output, recording, and reproduction of a voice signal.

The information transmission path for exchanging information with the various units such as the interface unit 41 and the image generation unit 21 may be either wired or wireless. For instance, when wired information transmission path is used, a power supply means can be externally installed. When a wireless information transmission path is used, it is unnecessary to pull out a cable from within the full-face mask 1, so the risk of leakage can be reduced.

Further, in the information terminal 40 illustrated in Fig. 4, the image generation unit 21, the camera unit 24, the input unit 61, the microphone 62a as a voice input means, the earphone 62b as a voice output means, the dosimeter 64a, the thermometer 64b, and the hygrometer 64c are connected to the interface unit 41 such that information can be inputted and outputted in a wired or wireless manner. The information terminal 40 inputs and outputs information via the interface unit 41.

As to the information terminal 40 of the information display device 20, it is sufficient that at least the image generation unit 21 and the interface unit 41 are connected such that information can be inputted and outputted. The interface function with the image generation unit 21 and the interface function with units other than the image generation unit 21 may be omitted as appropriate.

Further, the interface unit 41 may further have a function of controlling a unit that inputs and outputs information. For instance, in the case of the camera unit 24, the interface unit 41 may have a function corresponding to the camera control unit 24b.

The transmission unit 42 has a function of establishing an information transmission path with an external device installed externally to the information display device 20 such as the server 50 and bidirectionally transmitting information. In the case of the information terminal 40 illustrated in Fig. 4, the transmission unit 42 establishes a wireless information transmission path with a base station such as an access point and further establishes an information transmission path with the server 50 via the base station, with which the information transmission path has been established, so as to realize bidirectional information transmission with the server 50.

The position measurement unit 43 includes, e.g., a sensor such as an acceleration sensor and a gyro sensor (angular acceleration sensor) and a receiving unit that receives radio waves from GPS satellites constituting the global positioning system (GPS). The position measurement unit 43 has a function of acquiring three-dimensional positional information of the information terminal 40.

The three-dimensional positional information of the information terminal 40 acquired by the position measurement unit 43 is, e.g., three-dimensional coordinates on the basis of a predetermined reference point. The three-dimensional positional information of the information terminal 40 acquired by the position measurement unit 43 is provided to the server 50 and the storage unit 45 via the transmission unit 42.

Note that acquisition of the three-dimensional positional information of the information terminal 40 is not limited to the above-describe method, and other methods can be selected in consideration of required position accuracy and the like. For instance, when the information terminal 40 is in an area where wireless communication is possible, it is also possible to acquire the three-dimensional positional information of the information terminal 40 by using (a) distance from the estimated current location and (b) the positional information of the base stations such as plural access points at different locations around the periphery where the three-dimensional positional information is known and radio waves can be received.

The display-condition specifying unit 44 has a function of setting a display condition with respect to an image to be viewed by a user (i.e., an image to be displayed), a function of determining presence/absence of the display condition to be set, and a function of determining whether the display condition having been set is satisfied or not when the display condition is determined to be present. The display-condition specifying unit 44 determines whether display of an image to be viewed by a user is allowed or not (i.e., prohibited or not), according to the above-described determination result as to whether the display condition having been set is satisfied or not. The display-condition specifying unit 44 provides the control unit 47 with this determination result as to whether the above-described display is allowed or not.

When the display condition is set, the display-condition specifying unit 44 outputs the information of the display condition having been set to the storage unit 45 in association with the identification information of the image to be displayed. In the storage unit 45, image identification information for specifying an image to be displayed and the display condition are associated with each other and then stored.

When the display condition to be set is present with respect to the image to be viewed by a user, the display-condition specifying unit 44 communicates with the other units 41 to 43, 45, and 46 serving as information sources so as to acquire information necessary for determining whether the display condition is satisfied or not in addition to the information indicating the content of this display condition.

The necessary information for determining whether the display condition is satisfied or not varies depending on the display condition. However, for instance, when the display condition indicates a case where the information terminal 40 has come within the radius of 5 m of the device M (three-dimensional positional information of the device M is known), the three-dimensional positional information indicating an area within a radius of 5 m of the device M and the three-dimensional positional information of the information terminal 40 acquired by the position measurement unit 43 are necessary for determining whether the display condition is satisfied or not. In this case, information necessary for determining whether the display condition is satisfied is the three-dimensional positional information of the device M and the three-dimensional positional information of the information terminal 40.

As another example of the display condition, consider the case where WBGT (Wet-Bulb Globe Temperature) is 25°C or higher (i.e., warning level or higher). In this case, when the WBGT measurement means capable of measuring a WBGT value such as a WBGT measuring device is connected to the interface unit 41, the information on the criterion formula (measured WBGT value T ≥ 25) of satisfying the display condition is stored in the storage unit 45 and it is determined whether the condition is satisfied or not, by acquiring the measured WBGT value from the interface unit 41.

Even in the case where the WBGT measuring means is not connected to the interface section 41, the WBGT value can be obtained in the following manner when the thermometer 64b and the hygrometer 64c for measuring temperature (dry-bulb temperature) and humidity (relative humidity) are connected to the interface unit 41. That is, the WBGT value can be obtained by storing table data, which gives WBGT values by using temperature (dry-bulb temperature) and humidity (relative humidity) as matrix elements, in the storage unit 45, acquiring respective measurement values of the temperature (dry bulb temperature) and humidity (relative humidity) from the interface unit 41, and acquiring the table data giving the WBGT values from the storage unit 45.

The storage unit 45 has a readable/writable area, to which the respective units 41 to 44, and 46 in the information terminal 40 can access. The storage unit 45 provides an area for storing information necessary for executing various types of processing.

The storage unit 45 stores, e.g., information used for generating image information to be transmitted to the image generation unit 21, such as (a) information on a screen format, (b) information on a criterion for determining whether it is necessary to update data or not, and (c) information indicating correspondence relationship between the display condition specified by the display-condition specifying unit 44 and the image. If necessary, the storage unit 45 stores information on the measurement result of the sensor 64 connected via the interface unit 41, three-dimensional positional information of the information terminal 40 measured by the position measurement unit 43, and information that is transmitted to the server 50.

The image-information generation unit 46 has a function of generating image information on an image that is transmitted to the image generation unit 21. This image information includes a screen format of a screen visually recognized by a user and data constituting the screen. Generation of this image information is performed by pasting data constituting the screen on a predetermined area in a screen format.

Further, the image-information generation unit 46 may have a function of determining whether the state of the data constituting the screen is the latest or not and a function of holding information of the previously generated image on the basis of on the same screen format. In this case, the image-information generation unit 46 determines whether it is necessary to update data constituting a screen generated from the screen format of the image to be generated. For instance, the storage unit 45 stores information that serves as a determination criterion, such as update frequency information and version information indicating the latest version.

By referring to the determination criterion, the image-information generation unit 46 determines that data update is unnecessary, when the data pasted on the screen format as the basis of the previously generated image is the latest data even at the current time. Conversely, when the data pasted on the screen format as the basis of the previously generated image is not the latest data at the current time, the image-information generation unit 46 determines that data update is necessary.

When the data update is necessary, the image-information generation unit 46 acquires data requiring data updating from the holder of the data and updates the acquired data with respect to the information of the held image so as to generate the image information. Conversely, when data updating is unnecessary, generation of new image information can be omitted by using the information of the held image.

The control unit 47 exchanges information with the units connected via the interface unit 41. Specifically, in the case of the information terminal 40 illustrated in Fig. 4, the control unit 47 exchanges information with the image generation unit 21, the camera unit 24, the input unit 61, the voice input/output unit 62, and the sensor 64 (including the dosimeter 64a) that are connected with each other via the interface unit 41.

The control unit 47 controls transmission and reception of information with the transmission unit 42. In the case of the information terminal 40 illustrated in Fig. 4, the control unit 47 controls transmission and reception of information between the transmission unit 42 and its surrounding units including the interface unit 41, the position measurement unit 43, the display-condition specifying unit 44, the storage unit 45, and the image-information generation unit 46.

When the information terminal 40 includes the position measurement unit 43, the control unit 47 acquires the three-dimensional positional information of the information terminal 40 measured by the position measurement unit 43 and outputs the acquired three-dimensional positional information to the transmission unit 42. In the case of the information terminal 40 illustrated in Fig. 4, the three-dimensional positional information of the information terminal 40 measured by the position measurement unit 43 is transmitted to the server 50 connected via the transmission unit 42.

Further, when the information terminal 40 includes the display-condition specifying unit 44, the control unit 47 provides information necessary for determining the display condition that is specified with respect to the display-condition specifying unit 44. When the display-condition specifying unit 44 permits the display of the image, the control unit 47 causes the image generation unit 21 to generate the image signal of the image. Conversely, when the display-condition specifying unit 44 does not permit the display of the image, the control unit 47 controls the operation of the image generation unit 21 in such a manner that the image generation unit 21 does not generate the image signal of the image.

More specifically, when the control unit 47 acquires, information indicative of the display condition being satisfied from the display-condition specifying unit 44, the control unit 47 outputs the information of the image associated with the satisfied display condition to the interface unit 41 that is connected to the image generation unit 21 so as to be able to communicate therewith, in order to transmit this information to the image generation unit 21.

Conversely, when the control unit 47 acquires information indicative of the display condition being unsatisfied from the display-condition specifying unit 44, the control unit 47 does not output the information of the image associated with the satisfied display condition to the interface unit 41. In addition, the control unit 47 may provide the interface unit 41 with a command to prohibit generation of an image to be transmitted to the image generation unit 21.

Upon receiving the generated image information from the image-information generation unit 46, the control unit 47 outputs the received image information to the interface unit 41. Further, upon receiving data request from the image-information generation unit 46, the control unit 47 provides the requested data to the image-information generation unit 46 after acquiring the requested data from the unit or device in which the requested data are stored, i.e., from the storage unit 45 or the server 50 connected via the transmission unit 42.

Note that the information terminal 40 is not limited to the configuration illustrated in Fig. 4. It is sufficient for the information terminal 40 to include at least (a) the interface unit 41 having an interface function with the image generation unit 21 and (b) the control unit 47 for controlling the interface unit 41. In other words, the information terminal 40 can be configured by appropriately omitting an arbitrary component such as the position measurement unit 43, or the information terminal 40 can be configured by extending other functions (e.g., by adding a processing unit).

The server 50 is a computer having a function of storing and distributing information. The server 50 includes, e.g., a transmission unit 51 having a bidirectional information transmission function, an integrated management unit 52 having a function of managing information transmission/reception between the server 50 and the information display device 20 serving as a client, and a storage unit 53 capable of storing information. The information display device 20 and the server 50 illustrated in Fig. 4 constitute an information display system (server/client system) in which the information display device 20 serves as a client.

The integrated management unit 52 associates the information received via the transmission unit 51 so as to store this information in the storage unit 53 (information storage function). For instance, the measurement result measured by the sensor 64 and the position measurement result (three-dimensional positional information of the information terminal 40) measured by the position measurement unit 43 received via the transmission unit 51 are associated with each other and stored in the storage unit 53.

In response to an information distribution request received from the information display device 20 via the transmission unit 51, the integrated management unit 52 searches the storage unit 53 for the information corresponding to the information distribution request (information searching function). Furthermore, upon extracting the information corresponding to the information distribution request, the integrated management unit 52 distributes the extracted information to the information display device 20, which is the request source, through the transmission unit 51 (information distribution function).

For instance, when the integrated management unit 52 receives an information distribution request for dose at a point P, the integrated management unit 52 searches the storage unit 53, in which dose information (measurement result) associated with three-dimensional positional information is stored, for the three-dimensional positional information of the point P by using the three-dimensional positional information of the point P as a search key, and further searches the storage unit 53 for the dose information (measurement result) that is associated with the three-dimensional positional information of the point P. When the dose information (measurement result) corresponding to the information distribution request is extracted as a result of the searching, the extracted information is distributed to the information display device 20 that is the source of the information distribution request.

Note that the integrated management unit 52 may have a mapping function of mapping measurement results by using an acquired measurement result, measured positional information, and map information of an area including the measured point. In this case, since all the measured values on the mapped map are not necessarily updated at the same timing, there may be difference in newness of information depending on each area. Thus, it is preferable that the integrated management unit 52 performs mapping processing of measurement values while zero-resetting a map generated at a predetermined timing such as the time of date change.

As to the information display devices 20 in the information display system (server/client system) including the information display device 20 and the server 50, it is sufficient that the number of the information display device 20 is one or more. That is, the number of the information display device 20 may be one or plural.

The information display device 20 equipped with the above-described information terminal 40 can acquire various types of information from the interface unit 41 and the transmission unit 42 and can transmit image information from the interface unit 41 to the image generation unit 21. Thus, the information display device 20 can display various types information on the screen of the full-face mask 1 which a user wears.

In addition, by connecting the voice input/output unit 62 to the interface unit 41, it is possible to input and output voice, so it is possible to communicate with a remote place by voice. Accordingly, a user can transmit the situation of the work site to the remote place by voice, and can receive an instruction from the supervisor, who confirmed the situation of the site at the remote place, by voice. Thus, accuracy and speed of work can be improved. Since work can be performed efficiently, it is possible to reduce the number of persons entering the work site more than the conventional technology.

When the information terminal 40 includes the position measurement unit 43, it is possible to generate image information by using the three-dimensional positional information of the information terminal 40.

Further, when the information terminal 40 includes the display-condition specifying unit 44, images can be automatically displayed when the display condition having been set is satisfied. Thus, a user can visually recognize necessary information when needed.

When images are always displayed on the reflecting plate 27 in front of the eyes, attention to movement and work tends to decrease by the amount of attention paid to the displayed image during movement or work. However, by limiting the image display to the case where the display condition having been set is satisfied, it is possible to avoid a decrease in attention during movement or work as an advantage. By avoiding a decrease in attention during movement or during work, a user can use the information display device 20 without compromising security.

Further, when the information terminal 40 can bidirectionally transmit information with the server 50, it is possible to acquire information from the server 50 storing information from a device that a user does not carry and to display the acquired information on the screen. The device that a user does not carry is, e.g., the sensor 64 including the dosimeter 64a and a monitoring camera.

Moreover, when the server/client system is constituted by plural information display devices 20 and the server 50, the information gathered from the respective information display devices 20 can be shared and utilized in each of the information display devices 20.

For instance, by constructing the above-described server/client system, the sensor 64 including the dosimeter 64a, the thermometer 64b, and the hygrometer 64c is connected and it is possible to share information collected by plural users who move carrying the sensor 64 and the information terminal 40 equipped with the transmission unit 42 and the position measurement unit 43. In this case, measurement results such as dose, temperature, and humidity can be mapped for an area within the range where the plural users moved. Since the information obtained by the mapping can be provided to each user, for instance, each user can prevent increase of the unexpected exposure dose by checking the measurement value of dose of the current location to be displayed.

As another example, a user can prevent collapse due to heatstroke by checking a displayed index such as temperature and humidity or a WBGT value (heat index) obtained from temperature and humidity. By using a WBGT measuring means as an example of the sensor 64, the WBGT value (heat index) directly obtained can be presented to a user as an index indicative of the risk of heatstroke.

In the above-described information display device 20, some or all of the functions of the image generation unit 21 may be incorporated into the information terminal 40 as a function of the information terminal 40. Further, each of the processing units such as the camera control unit 24b, the voice control unit 62b, the interface unit 41, the position measurement unit 43, the display-condition specifying unit 44, the image-information generation unit 46, and the integrated management unit 52 can be realized by a combination of a processor that executes a program and programs that can be executed by the processor, such as single hardware or a method of causing the processor to execute the programs stored in a memory circuit. The memory circuit for storing the programs may be provided outside the processor or may be provided inside.

Next, a description will be given of the processing procedure (i.e., information display procedure) for displaying information provided to a user by the information display device 20.

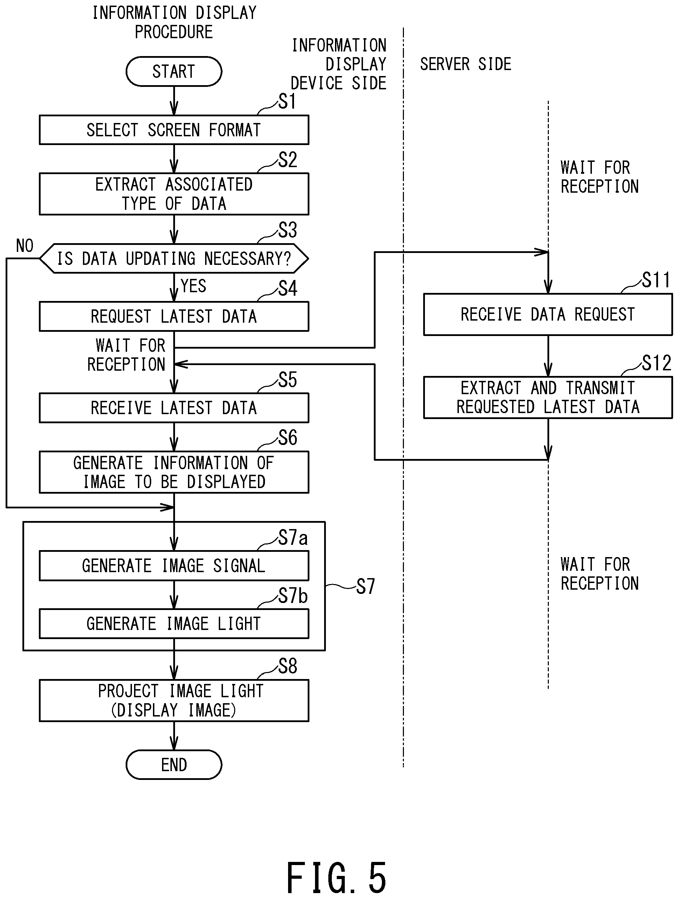

Fig. 5 is a flowchart illustrating the flow of the processing steps of the information display procedure performed by the information display device 20.

The processing flow of the information display procedure in Fig. 5 illustrates a processing flow for a case where the information display device 20 is connected with the server 50 in the state of being capable of transmitting and receiving information to/from the server 50 and data to be pasted on the screen format are acquired from the server 50 at the time of generating image information.

For instance, the information display procedure (steps S1 to S8) includes a screen format selection step S1, a data-type extraction step S2, a data-updating-necessity determination step S3, a latest-data request step S4, a latest-data reception step S5, an image information generation step S6, an image generation step S7 composed of an image signal generation step S7a and an image-light generation step S7b, and an image display step S8.

When the information display device 20 starts the information display procedure, a user first wears the information display device 20. Attachment of the information display device 20 is carried out by a user who tries to wear the full-face mask 1 in the following manner. That is, the user places the frame unit 23 inside the full-face mask 1 and then positions the frame unit 23 inside the full-face mask 1 by wearing this full-face mask 1 on his/her face, wherein the optical unit 22 equipped with the light source, the optical element, and the reflection plate 27 are attached to the frame unit 23. Thereafter, when the user activates the information display device 20, the information display device 20 establishes a state (connection) in which the information display device 20 can transmit and receive information to/from the server 50, and starts the processing steps of the information display procedure (START).

When the processing step of the information display procedure is started and an information-display request is inputted to the information terminal 40, in the step S1, the screen format of the screen for displaying the corresponding information is selected in response to the information-display request inputted to the information terminal 40.

In the storage unit 45, the screen format is stored in association with data constituting the inputted information-display request and the screen, such as measurement results (e.g., dose, temperature, and humidity), a document, and a map. In the screen format selection step S1, the image-information generation unit 46 searches for and extracts the screen format associated with the inputted information-display request so as to select the screen format.

After the screen format is selected, in the next step S2, the image-information generation unit 46 extracts the type of data associated with the information of the selected screen format.

After the type of data is extracted, in the next step S3, the image-information generation unit 46 determines whether data updating is necessary for the data belonging to the extracted type of data or not. Necessity of data updating is determined by giving the type of data and update date and time as determination criteria and determining whether the data to be pasted on the screen format satisfy the determination criteria or not.

For instance, when the type of requested data is measurement data (measurement result), since measurement data are data to be measured periodically, it is possible to determine the necessity of the data depending on whether a time longer than the measurement interval has passed or not. Further, when version information exists in the data, it is possible to determine the necessity of the data by checking whether the version information is the latest version or not.

When the determination result is affirmative in the step S3 (i.e., when data updating is necessary), in the next step S4, the image-information generation unit 46 requests the control unit 47 to provide the latest data. In the step S4, the control unit 47 requests the latest data from the server 50, which is the storage destination of the requested data, and waits for data reception from the server 50.

When the server 50 receives the request transmitted from the information display device 20 in the next step S11, in the next step S12, the server 50 extracts the requested latest data and transmits the extracted latest data to the information display device 20.

When the transmission unit 42 receives the latest data from the server 50 in the step S5, the control unit 47 receives the latest data from the transmission unit 42 and provides the latest data to the image-information generation unit 46.

After receiving the latest data from the control unit 47, in the next step S6, the image-information generation unit 46 generates image information by using the latest data. The generated image information is provided to the image generation unit 21 connected via the interface unit 41.

In the next steps S7a and S7b, an image based on the image information generated in the step S6 is generated in the image generation unit 21 and the optical unit 22.

In the next step S8, the generated image is displayed.

To describe the image generation step S7 and the image display step S8 in more detail, the image generation unit 21 acquires the image information received from the interface unit 41 as the image signal generation step 7a. Here, the generated image signal is given from the image generation unit 21 to the optical unit 22.

The optical unit 22 generates image light on the basis of the image signal as the image light generation step S7b. After generating the image light, the optical unit 22 projects the generated image light onto the reflection plate 27 as the image display step S8. The image light projected onto the reflection plate 27 is reflected by the reflection plate 27 and guided to the user's pupils.

Conversely, when the determination result is negative in the step S3 (i.e., when data updating is unnecessary), the processing proceeds from the step S4 to the step S7 and the processing of the step S7 and the subsequent step is executed.

When the processing step is executed in the above-described flow and the display of the generated image is executed in the step S8, the information display procedure is completed (END).

Although a description has been given of the case where data requiring updating is stored (accumulated) in the server 50 in the information display procedure illustrated in Fig. 5, transmission/reception of information between the information terminal 40 and the server 50 is omitted when the data requiring updating is stored in the information terminal 40.

According to the information display device 20 and the information display method of the present embodiment as described above, even when protective equipment such as the full-face mask 1 covering the face is worn, a user wearing the protective equipment can wear the information display device 20 inside the protective equipment and use it.

For instance, according to the information display device 20 and the information display method of using the information display device 20, it is possible to wear the information display device 20 inside the full-face mask 1 covering the face without using a conventional glasses-type attachment. Thus, visibility of the information to be displayed can be improved without obstructing the user's view by the full-face mask 1 as compared with the case of wearing the full-face mask 1 outside the full-face mask 1. Further, it is possible to display necessary information to the wearer (user) of the full-face mask 1 without causing leakage that can occur in the case of using the conventional glasses-type attachment.

Since the image generation unit 21, the optical unit 22, and the frame unit 23 are housed inside the full-face mask 1 and are not exposed to the outside world, they are not influenced by the environment of the outside world and thus maintenance such as cleaning and reuse can be facilitated.

Further, the position of the optical unit 22 with respect to the frame unit 23 can be adjusted in plural directions different from each other. Hence, even when a user wearing the full-face mask 1 is different for each use, it is possible to adjust the positional relationship between the eyes of the user and the optical unit 22 to a suitable position and use it.

In the information display device 20 equipped with the information terminal 40, the information terminal 40 can acquire various types of information from the interface unit 41 and the transmission unit 42, and image information can be transmitted from the interface unit 41 to the image generation unit 21. Thus, it is possible to display various types of information on the screen to the user wearing the full-face mask 1.

Further, according to the information display device 20 equipped with the information terminal 40, by connecting the voice input/output unit 62 to the interface unit 41, it becomes possible to communicate with the remote place by voice, and a user can inform the supervisor at the remote place of the situation of the worksite by voice and can receive an instruction from the supervisor, who has checked the situation of the worksite at the remote place, by voice. Hence, the accuracy and speed of the work can be improved. In addition, since it is possible to perform work efficiently, it is possible to reduce the number of personnel entering the worksite more than before.

In the information display device 20 equipped with the information terminal 40 that includes the display-condition specifying unit 44, it is possible to automatically display an image when the image condition having been set is satisfied. Thus, a user can visually check necessary information when needed. In addition, since the display of information is limited to the case where the information is necessary, it is possible to avoid reduction in attention during movement or during work and a user can use the information display device 20 without compromising safety.

In addition, when the information terminals 40 can bidirectionally transmit information with the server 50 and the server/client system is constituted by the information display devices 20 and the server 50, it is possible to acquire information from the server 50 storing information from a device, which the user does not carry, and to display the acquired information on the screen. Furthermore, information transmitted from the respective information display devices 20 to be stored in the server 50 can be shared and used in each of the information display devices 20.

By constructing the above-described server/client system, for instance, the sensor 64 including the dosimeter 64a, the thermometer 64b, and the hygrometer 64c are connected, information gathered by plural users moving with the sensor 64 and the information terminal 40 equipped with the transmission unit 42 and the position measurement unit 43 can be shared, and measurement results such as dose, temperature, and humidity can be mapped for a region within a range where the plural users move. Since the information obtained by the mapping can be provided to each user, for instance, each user can more appropriately manage physical conditions and the like on the basis of the displayed information.

Whereas a few embodiments of the present invention have been described, these embodiments are presented only by way of example, and not intended to limit the scope of the invention. These embodiments can be implemented in various other forms, and various omissions, replacements, changes, and combinations can be made without departing from the spirit of the invention. These embodiments and modifications thereof are included in the spirit and scope of the invention as well as in the invention set forth in the appended claims and the scope of equivalents thereof.

## Claims

1. An information display device comprising:
a frame unit equipped with a first frame displaceable inside a full-face mask and a second frame positioned inside the full-face mask by a pressing force that is generated by displacement of the first frame when a user wears the full-face mask; and
an optical unit that is attached to the frame unit and can display an image in accordance with an image signal of an image to be viewed by the user.

2. The information display device according to claim 1, further comprising an image generation unit that is attached to the frame unit and generates the image signal.

3. The information display device according to claim 1,
wherein the optical unit is configured to be able to be positionally adjusted in at least one of a direction corresponding to an anteroposterior direction of the user, a direction corresponding to a right-and-left direction of the user, and a direction corresponding to an up-and-down direction of the user.

4. The information display device according to claim 1, further comprising a camera that is attached to the frame unit and images an object outside the full-face mask.

5. The information display device according to claim 1, further comprising a microphone attached to the frame unit.

6. The information display device according to claim 2, further comprising an information terminal that is connected to the image generation unit and is configured to transmit a signal corresponding to the image to be viewed by the user.

7. The information display device according to claim 6,
wherein the information terminal comprises a position measurement unit configured to measure a three-dimensional positional information of the information terminal.

8. The information display device according to claim 6,
wherein the information terminal comprises:
a display-condition specifying unit configured to receive setting of a display condition for the image to be viewed by the user and determine whether the display condition is satisfied or not; and
a control unit configured to
allow the image generation unit to generate the image signal when the display-condition specifying unit determines that the display condition is satisfied, and
prohibit the image generation unit from generating the image signal when the display-condition specifying unit determines that the display condition is not satisfied.

9. The information display device according to claim 6,
wherein the information terminal comprises an interface unit connected to another unit in such a manner that information can be transmitted between the information terminal and the another unit.

10. An information display method comprising:
disposing a frame unit equipped with an optical frame inside a full-face mask, the optical frame being capable of displaying an image in accordance with an image signal of an image in such a manner that the image is viewed by the user;
positioning the frame unit inside the full-face mask by attaching the full-face mask to the user; and
causing the optical unit to display the image to be viewed by the user under a state where the full-face mask is attached to the user.
